# EUROPEAN PATENT SPECIFICATION

(11) **EP 3 792 176 B1**
(45) Date of publication and mention of the grant of the patent: **19.07.2023**
(21) Application number: 19800174.5
(22) Date of filing: 08.05.2019
(51) Int. Cl.: B64C 5/00, B64C 1/00, B64C 39/10

(54) **AIRCRAFT WITH NO VERTICAL TAIL**
FLUGZEUG OHNE VERTIKALES LEITWERK
AÉRONEF SANS EMPANNAGE VERTICAL

(30) Priority: 10.05.2018 JP 2018091662
(43) Date of publication of application: 17.03.2021
(73) Proprietor: Kawasaki Jukogyo Kabushiki Kaisha, Hyogo 650-8670 (JP)
(72) Inventor: FURUMOTO, Takuya, Kobe-shi, Hyogo 650-8670 (JP); SONODA, Seiichi, Kobe-shi, Hyogo 650-8670 (JP); SHIBATA, Yoshiyuki, Kobe-shi, Hyogo 650-8670 (JP); ASANO, Hiroyoshi, Kobe-shi, Hyogo 650-8670 (JP)
(74) Representative: Leinweber & Zimmermann
(86) International application number: PCT/JP2019/018422
(87) International publication number: WO 2019/216350

(56) References cited:
- JP-A- H0 495 600
- US-A- 5 255 881
- US-A- 5 909 858
- US-A- 5 909 858
- US-A1- 2010 019 081
- US-A1- 2013 206 920
- US-B1- 6 378 803

## Description

### Technical Field

The present invention relates to a vertical-tailless aircraft that is an aircraft without a vertical tail.

### Background Art

A vertical-tailless airplane of PTL 1 is known as a conventional vertical-tailless aircraft that is an aircraft without a vertical tail. An airframe of the vertical-tailless airplane includes a left body portion and a right body portion. The left body portion diagonally projects from a side surface of a main body portion of the airframe toward a left, rear, and outer side, and the right body portion diagonally projects from the side surface of the main body portion of the airframe toward a right, rear, and outer side. Elevators are provided at rear end portions of the left and right body portions. A vertical-tailless aircraft according to the preamble of claim 1 is known from US 5 909 858 A. A similar solution is disclosed in US 20101019081 A1.

### Citation List

### Patent Literature

PTL 1: Japanese Laid-Open Patent Application Publication No. 2017-019322

### Summary of invention

### Technical Problem

According to the vertical-tailless airplane of PTL 1, directional stability thereof is improved by utilizing a difference between the speed of air flow on an upper surface of the airframe and the speed of air flow on a lower surface of the airframe when the vertical-tailless airplane sideslips. Therefore, each of the upper and lower surfaces of the airframe needs to have a curved shape, and therefore, it is hard to say that the manufacturing cost is low.

The present invention was made to solve the above problem, and an object of the present invention is to provide a vertical-tailless aircraft capable of improving directional stability by a simple configuration while suppressing a cost increase.

### Solution to Problem

According to the invention, the above problem is solved by a vertical-tailless aircraft according to claim 1.

According to this configuration, force acting in such a direction as to reduce a deviation between the aircraft axis and a flight direction due to the sideslip is generated by the negative pressure generated on the side surface. Therefore, directional stability can be improved by a simple configuration while suppressing a cost increase.

### Advantageous Effects of Invention

The present invention has the above-described configuration and has an effect of being able to provide a vertical-tailless aircraft capable of improving directional stability by a simple configuration while suppressing a cost increase.

The above object, other objects, features, and advantages of the present invention will be made clear by the following detailed explanation of preferred embodiments with reference to the attached drawings.

### Brief Description of Drawings

FIG. 1 is a diagram showing a vertical-tailless aircraft according to an embodiment when viewed from an upper side.
FIG. 2 is a diagram showing the vertical-tailless aircraft of FIG. 1 when viewed from a left side.
FIG. 3 is a sectional view of the vertical-tailless aircraft taken along line A-A' of FIG. 1.
FIG. 4 is a sectional view showing the vertical-tailless aircraft according to a modified example of the embodiment.
FIGS. 5A and 5B are sectional views showing the vertical-tailless aircrafts according to other modified examples of the embodiment.
FIGS. 6A and 6B are sectional views showing the vertical-tailless aircrafts according to other modified examples of the embodiment.

### Description of Embodiments

A vertical-tailless aircraft according to one aspect includes: a body extending in a direction along an aircraft axis; a main wing provided on a side surface of the body; and a negative pressure generating portion configured to generate negative pressure on the side surface of a rear portion of the body when the vertical-tailless aircraft sideslips.

According to this configuration, force acting in such a direction as to reduce a deviation between the aircraft axis and a flight direction due to the sideslip is generated by the negative pressure generated on the side surface. Therefore, directional stability can be improved by a simple configuration while suppressing a cost increase.

In this vertical-tailless aircraft, the rear portion of the body includes a corner portion formed between a ceiling surface and the side surface and between a bottom surface and the side surface, and the negative pressure generating portion is the corner portion. According to this configuration, air flow flowing along the end surface due to the sideslip separates at the corner portion. Thus, the negative pressure is efficiently generated on the side surface, and therefore, the directional stability can be improved. Furthermore, since the negative pressure generating portion is formed by providing the corner portion of the rear portion, the configuration can be simplified, and the cost increase can be suppressed.

In this vertical-tailless aircraft, an interior angle of the corner portion in a section of the rear portion of the body which section is perpendicular to the aircraft axis is 60° or more and 150° or less. According to this configuration, the negative pressure is efficiently generated at the corner portion having such angle, and therefore, the directional stability can be improved.

In this vertical-tailless aircraft, the rear portion of the body may have a polygonal section perpendicular to the aircraft axis. According to this configuration, the negative pressure is efficiently generated at the negative pressure generating portion, and therefore, the directional stability can be improved. Furthermore, since the negative pressure generating portion is formed by the shape of the rear portion, the configuration can be simplified, and the cost increase can be suppressed.

In this vertical-tailless aircraft, the rear portion of the body may have such a shape that an area of a section of the rear portion which section is perpendicular to the aircraft axis decreases toward a rear side. According to this configuration, the negative pressure is more efficiently generated at the negative pressure generating portion, and therefore, the directional stability can be improved.

In this vertical-tailless aircraft, at least one of a ceiling surface and bottom surface of the rear portion of the body may be a flat surface. According to this configuration, since air flow flowing along the ceiling surface and/or the bottom surface as the flat surfaces easily separates at the corner portion, the directional stability can be improved by the generated negative pressure.

Hereinafter, an embodiment will be specifically described with reference to the drawings. In the following description and the drawings, the same reference signs are used for the same or corresponding components, and a repetition of the same explanation is avoided.

### Embodiment

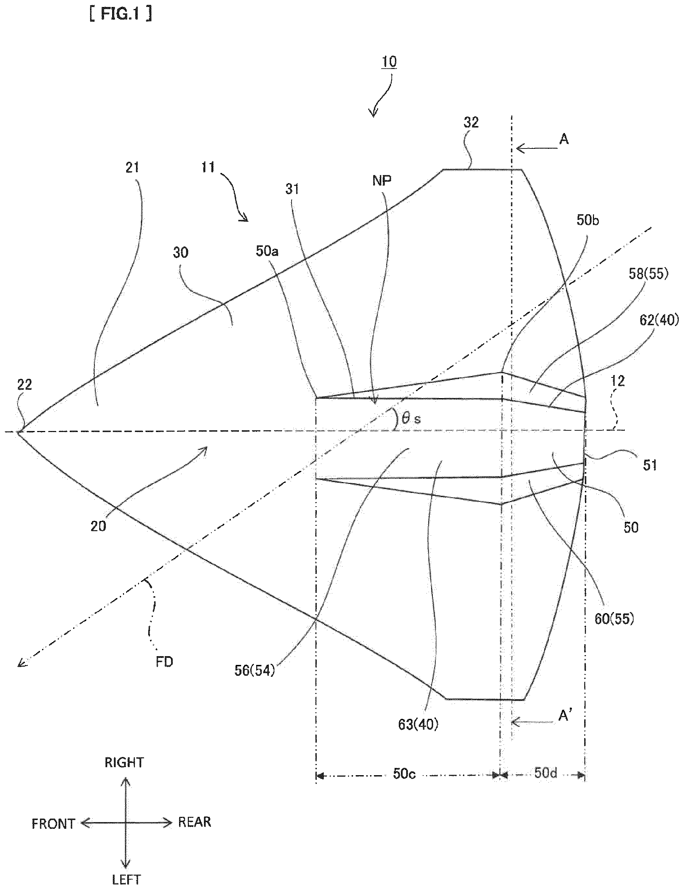

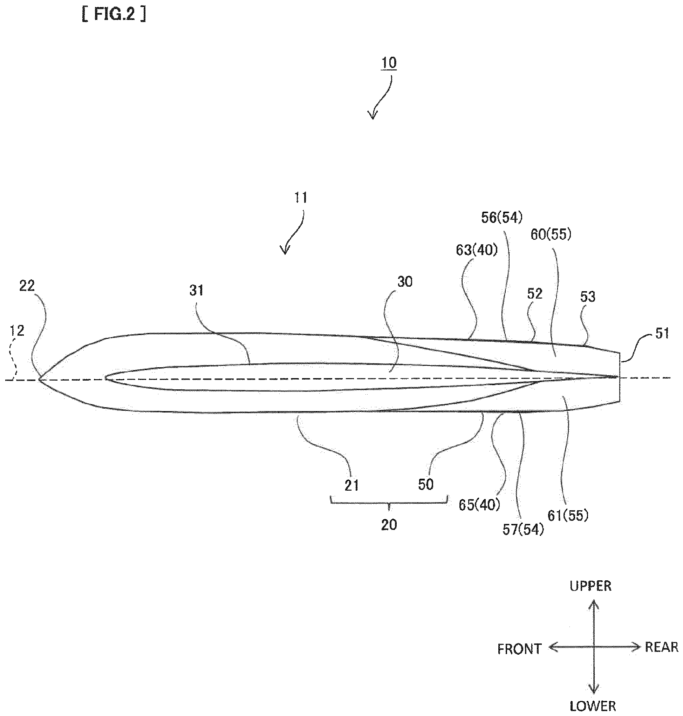

As shown in FIGS. 1 to 3, a vertical-tailless aircraft 10 according to the embodiment is an airplane, such as a flying wing, which does not include any horizontal tails or vertical tails. The vertical-tailless aircraft 10 includes an airframe 11 and a power unit (not shown). It should be noted that the following will describe the vertical-tailless aircraft which does not include any horizontal tails. However, the vertical-tailless aircraft 10 may include the horizontal tails as long as it does not include the vertical tail.

The airframe 11 includes a body 20, a main wing 30, and negative pressure generating portions 40. It should be noted that a direction parallel to an aircraft axis 12 of the airframe 11 extending in a front-rear direction is referred to as an aircraft axis direction, and directions perpendicular to the aircraft axis direction are referred to as an upper-lower direction and a left-right direction. However, directions of the vertical-tailless aircraft 10 are not limited to these directions.

The body 20 has a substantially tubular shape and extends in the aircraft axis direction. The body 20 includes a front portion (front body 21) and a rear portion (rear body 50) in the aircraft axis direction. The size of the rear body 50 in the aircraft axis direction is at least 5% or more and 60% or less of the size of the body 20 in the aircraft axis direction, more preferably 20% or more and 50% or less of the size of the body 20 in the aircraft axis direction.

The front body 21 has a circular or oval section perpendicular to the aircraft axis 12 and is formed in a curved shape in a circumferential direction. The front body 21 is inclined in a curved shape in the aircraft axis direction such that an area of the section perpendicular to the aircraft axis 12 decreases toward a front side. A front end portion 22 of the front body 21 is closed.

The size of the rear body 50 in the upper-lower direction is, for example, 50% or more of the size of the body 20 in the upper-lower direction. The size of the rear body 50 in the upper-lower direction is shorter than the size of the rear body 50 in the left-right direction. However, the size of the rear body 50 in the upper-lower direction may be the same as or longer than the size of the rear body 50 in the left-right direction.

The rear body 50 is reduced in size such that the area of a section thereof perpendicular to the aircraft axis 12 decreases toward a rear side. A rear end portion 51 of the rear body 50 is open as a nozzle outlet of a jet engine that is the power unit of the vertical-tailless aircraft 10. In the aircraft axis direction, the size of a part of the rear body 50 which part is reduced in size toward the rear side is longer than the size of a part of the front body 21 which part is reduced in size toward the front side. For example, the entire rear body 50 is reduced in size toward the rear side. However, such size-reduction shape may be formed at a part of the rear body 50. Typically, the size-reduction shape is formed at a rear portion including the rear end portion 51 in the rear body 50.

In the present embodiment, a ceiling surface 56 and a bottom surface 57 are linearly inclined in the aircraft axis direction such that the size of the rear body 50 in the upper-lower direction is reduced toward the rear side. An inclination angle of the rear body 50 in the aircraft axis direction changes at two portions 52 and 53, and this inclination angle increases toward the rear side. It should be noted that the ceiling surface 56 and the bottom surface 57 may be inclined in a curved shape in the aircraft axis direction such that the size of the rear body 50 in the upper-lower direction is reduced toward the rear side. Moreover, the size of the rear body 50 in the left-right direction may be reduced toward the rear side such that the area of the section of the rear body 50 decreases toward the rear side.

The rear body 50 is reduced in size toward the rear side such that the size of the ceiling surface 56 in the left-right direction and the size of the bottom surface 57 in the left-right direction are reduced toward the rear side. For example, both ends of the ceiling surface 56 and both ends of the bottom surface 57 are linearly inclined with respect to the aircraft axis 12. This inclination angle changes at a predetermined portion 50b that is located rearwardly away from a front end 50a of the rear body 50 by a predetermined distance, the the front end 50a being connected to the front body 21. In the rear body 50, the inclination angle of a rear portion 50d extending from the predetermined portion 50b to the rear end portion 51 is larger than the inclination angle of a front portion 50c extending from the front end 50a to the predetermined portion 50b. In the aircraft axis direction, the size of the front portion 50c is larger than the size of the rear portion 50d.

The rear body 50 has, for example, a polygonal section perpendicular to the aircraft axis 12. The rear body 50 includes end surfaces 54, side surfaces 55, and corner portions therebetween. In the present embodiment, the rear body 50 has a hexagonal shape and includes two end surfaces 54 and four side surfaces 55. The two end surfaces 54 are the ceiling surface 56 and the bottom surface 57. The four side surfaces 55 are an upper-right side surface 58, a lower-right side surface 59, an upper-left side surface 60, and a lower-left side surface 61. The four side surfaces 55 connect the ceiling surface 56 and the bottom surface 57.

The bottom surface 57 is provided substantially parallel to the ceiling surface 56 and is arranged lower than the ceiling surface 56. In the present embodiment, the ceiling surface 56 is a flat surface extending linearly in the left-right direction, and the bottom surface 57 is a curved surface extending in a curved shape in the left-right direction so as to be away from the aircraft axis 12. However, the ceiling surface 56 may be a curved surface. Moreover, the bottom surface 57 may be a flat surface. It should be noted that as long as the flat surface extends linearly in the left-right direction, the flat surface may curve in the aircraft axis direction or may be inclined linearly in the aircraft axis direction.

An upper end portion of the upper-right side surface 58 is connected to a right end portion of the ceiling surface 56, and a lower end portion of the upper-right side surface 58 is connected to an upper end portion of the lower-right side surface 59. A lower end portion of the lower-right side surface 59 is connected to a right end portion of the bottom surface 57. An upper end portion of the upper-left side surface 60 is connected to a left end portion of the ceiling surface 56, and a lower end portion of the upper-left side surface 60 is connected to an upper end portion of the lower-left side surface 61. A lower end portion of the lower-left side surface 61 is connected to a left end portion of the bottom surface 57.

The upper-right side surface 58 and the upper-left side surface 60 are symmetrical about a line passing through the aircraft axis 12 and extending in the upper-lower direction. Moreover, the lower-right side surface 59 and the lower-left side surface 61 are also symmetrical about the line. Each of the side surfaces 55 is a flat surface extending linearly in a predetermined direction perpendicular to the aircraft axis 12. It should be noted that each of the side surfaces 55 may curve in the aircraft axis direction or may be inclined linearly in the aircraft axis direction.

Each of the upper-right side surface 58 and the upper-left side surface 60 has such a shape that the size between its end connected to the ceiling surface 56 and its end connected to the main wing 30 increases toward the rear side in the front portion 50c of the rear body 50 and decreases toward the rear side in the rear portion 50d of the rear body 50. Each of the lower-right side surface 59 and the lower-left side surface 61 has such a shape that the size between its end connected to the bottom surface 57 and its end connected to the main wing 30 increases toward the rear side in the front portion 50c of the rear body 50 and decreases toward the rear side in the rear portion 50d of the rear body 50.

The corner portions include an upper-right corner portion 62 between the upper-right side surface 58 and the ceiling surface 56, an upper-left corner portion 63 between the upper-left side surface 60 and the ceiling surface 56, a lower-right corner portion 64 between the lower-right side surface 59 and the bottom surface 57, and a lower-left corner portion 65 between the lower-left side surface 61 and the bottom surface 57. Each of an angle θ1 of the upper-right corner portion 62, the angle θ1 of the upper-left corner portion 63, an angle θ2 of the lower-right corner portion 64, and the angle Θ2 of the lower-left corner portion 65 is 150° or less. In order to generate negative pressure, each of the angles θ1 and 02 is more preferably 90° or more and 150° or less. It should be noted that the angle of the corner portion denotes an interior angle of the corner portion in a section of the rear body 50 which section is perpendicular to the aircraft axis 12.

The main wing 30 is provided at the side surfaces 55 of the body 20 and extends from the body 20 linearly in the left-right direction. The main wing 30 has such a shape that the size in the left-right direction increases toward the rear side. The main wing 30 is, for example, a delta wing having a substantially triangular shape. The main wing 30 includes a wing root 31 and a wing tip 32. The wing root 31 is connected to the body 20. The wing tip 32 is located furthest away from the wing root 31 in the left-right direction. It should be noted that the main wing 30 is not limited to the delta wing.

A front edge of a part of the main wing 30 which part is located between the front end portion 22 and the wing tip 32 is inclined substantially linearly so as to be away from the wing root 31 as it extends toward the rear side in the aircraft axis direction. The wing tip 32 extends linearly in the aircraft axis direction from a predetermined position of the rear body 50. A rear end of the main wing 30 is formed in a curved shape such that the size of the main wing 30 in the aircraft axis direction increases from the wing tip 32 toward the wing root 31.

The wing root 31 is provided from the front body 21 to the rear end of the rear body 50 and extends in the aircraft axis direction. In the present embodiment, the wing root 31 is arranged between the upper-right side surface 58 and the lower-right side surface 59 in the upper-lower direction and between the upper-left side surface 60 and the lower-left side surface 61 in the upper-lower direction.

Each of the negative pressure generating portions 40 is a portion where negative pressure NP is generated on the side surface 55 of the rear body 50 at the time of sideslip. The negative pressure generating portions 40 are constituted by the corner portions of the rear body 50. Each of the corner portions constituting the negative pressure generating portions 40 is provided behind the center of gravity of the airframe 11, and the size of each corner portion in the aircraft axis direction is at least 5% or more and 60% or less of the size of the body 20 in the aircraft axis direction, more preferably 20% or more and 50% or less of the size of the body 20 in the aircraft axis direction.

For example, in a sideslip state in which a flight direction FD (shown by a two-dot chain line in FIG. 1) of the vertical-tailless aircraft 10 and the aircraft axis 12 (shown by a broken line in FIG. 1) do not coincide with each other, a sideslip angle θs is generated between the flight direction FD and the aircraft axis 12. In this case, air flow AF flows toward the body 20 in a direction opposite to the flight direction FD.

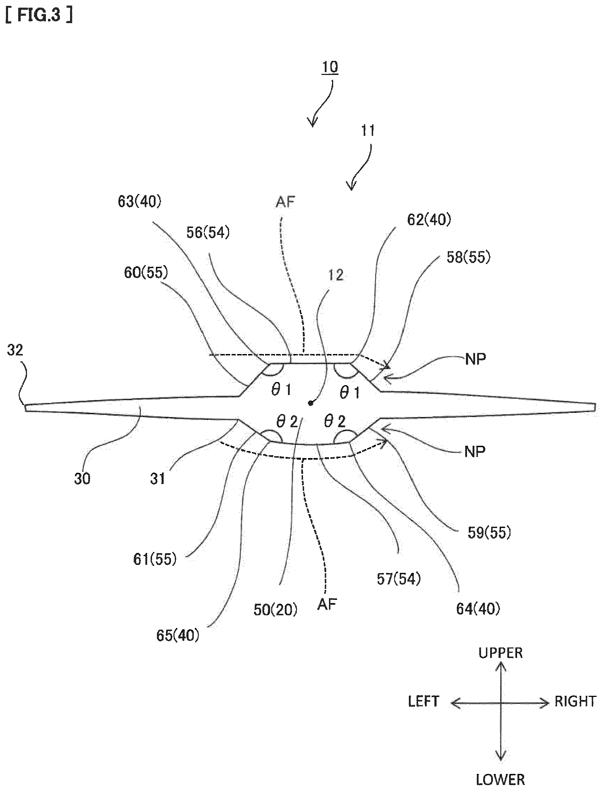

The air flow AF shown by a dotted line in FIG. 3 flows along the ceiling surface 56 in a direction intersecting with the aircraft axis 12 and separates at the upper-right corner portion 62. With this, the negative pressure NP is generated on the upper-right side surface 58 connected to the ceiling surface 56 through the upper-right corner portion 62. Similarly, the air flow AF flows along the bottom surface 57 in a direction intersecting with the aircraft axis 12 and separates at the lower-right corner portion 64. With this, the negative pressure NP is generated on the lower-right side surface 59 connected to the bottom surface 57 through the lower-right corner portion 64.

As above, as shown in FIG. 1, the negative pressure NP is generated on the side surface 55 which is located at a side that is the same as a side toward which a nose (front end portion 22) is directed with respect to the flight direction FD, the side surface 55 being located downstream of the aircraft axis 12 in a direction along the air flow AF. Force of directing the direction of the aircraft axis 12 toward the direction along the air flow AF is generated by the negative pressure NP. Therefore, the sideslip angle θs decreases, and the direction of the aircraft axis 12 changes to approach the flight direction FD. Thus, yawing is controlled, and therefore, directional stability can be improved.

According to the above embodiment, since the vertical-tailless aircraft 10 is not provided with a tail, a reduction in air resistance during flight, a reduction in weight, and a cost reduction by a reduction in the number of parts can be realized.

Moreover, a decrease in the directional stability by the absence of the tail can be reduced by the negative pressure generated by the negative pressure generating portions 40. Furthermore, since the side surfaces 55 and the ceiling surface 56 are formed as the flat surfaces, the negative pressure NP is easily generated, and therefore, the decrease in the directional stability can be further reduced.

In addition, since each of the angles θ1 and θ2 of the corner portions constituting the negative pressure generating portions 40 is 150° or less, the negative pressure NP is easily generated, and the decrease in the directional stability can be further reduced. Furthermore, since a plurality of negative pressure generating portions 40 are provided at the rear body 50 by the four corner portions, the decrease in the directional stability can be further reduced.

The size of the rear body 50 in the left-right direction is reduced toward the rear side such that the area of the section of the rear body 50 which section is perpendicular to the aircraft axis 12 decreases toward the rear side. Therefore, the negative pressure is generated more efficiently. Furthermore, since the size of the rear body 50 in the left-right direction is reduced toward the rear side, a region where the negative pressure is generated increases, and therefore, the decrease in the directional stability can be further reduced.

The side surfaces 55 and the ceiling surface 56 located adjacent to the negative pressure generating portions 40 which improve the directional stability are constituted by the flat surfaces, and this excels in manufacturability more than when these surfaces 55 and 56 are constituted by curved surfaces.

### Modified Example

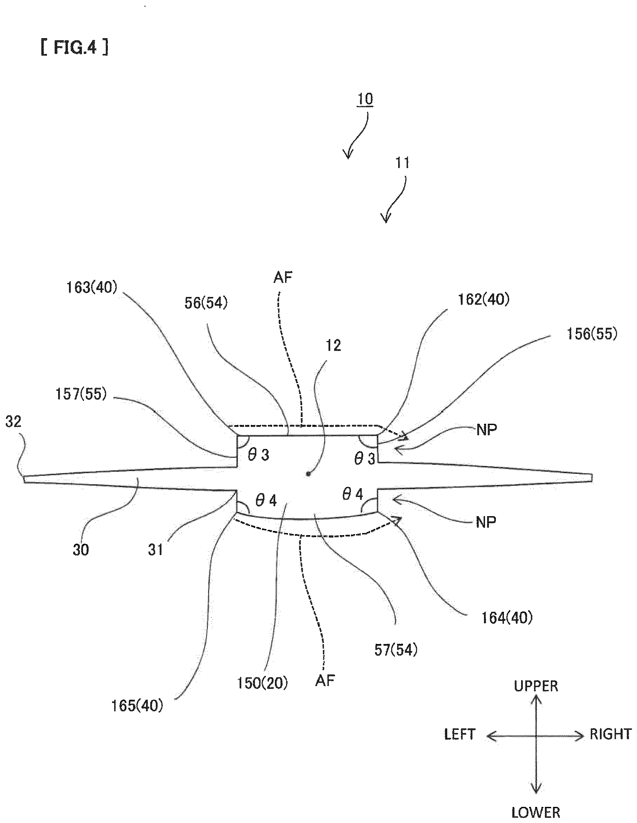

As shown in FIG. 4, in the vertical-tailless aircraft 10 according to a modified example, a section of a rear body 150 which section is perpendicular to the aircraft axis 12 may have a quadrangular shape. In this case, the rear body 150 includes the end surfaces 54, the side surfaces 55, and the corner portions therebetween. The end surfaces 54 include the ceiling surface 56 and the bottom surface 57. The side surfaces 55 include a right side surface 156 and a left side surface 157.

Regarding the upper-lower direction, an upper end portion of the right side surface 156 is connected to a right end portion of the ceiling surface 56, and a lower end portion of the right side surface 156 is connected to a right end portion of the bottom surface 57. An upper end portion of the left side surface 157 is connected to a left end portion of the ceiling surface 56, and a lower end portion of the left side surface 157 is connected to a left end portion of the bottom surface 57. The wing root 31 is provided at of a center of the right side surface 156 in the upper-lower direction and a center of the left side surface 157 in the upper-lower direction.

The corner portions include an upper-right corner portion 162 between the right side surface 156 and the ceiling surface 56, an upper-left corner portion 163 between the left side surface 157 and the ceiling surface 56, a lower-right corner portion 164 between the right side surface 156 and the bottom surface 57, and a lower-left corner portion 165 between the left side surface 157 and the bottom surface 57. Each of an angle θ3 of the upper-right corner portion 162, the angle θ3 of the upper-left corner portion 163, an angle θ4 of the lower-right corner portion 164, and the angle θ4 of the lower-left corner portion 165 is 90°.

The ceiling surface 56 is a flat surface extending linearly in the left-right direction. The right side surface 156 and the left side surface 157 are flat surfaces extending linearly in the upper-lower direction. The bottom surface 57 is a curved surface extending in a curved shape in the left-right direction. It should be noted that at least one of the ceiling surface 56, the right side surface 156, and the left side surface 157 may be a curved surface. Moreover, the bottom surface 57 may be a flat surface. The directional stability by the negative pressure generating portions 40 when these surfaces are constituted by flat surfaces is more excellent than the directional stability by the negative pressure generating portions 40 when these surfaces are constituted by curved surfaces.

The negative pressure generating portions 40 are constituted by the upper-right corner portion 162, the upper-left corner portion 163, the lower-right corner portion 164, and the lower-left corner portion 165. For example, when the upper-right corner portion 162 and the lower-right corner portion 164 are located at a downstream side in a direction along the air flow AF, the negative pressure NP is generated on the right side surface 156. In contrast, when the upper-left corner portion 163 and the lower-left corner portion 165 are located at a downstream side in the direction along the air flow AF, the negative pressure NP is generated on the left side surface 157. With this, the directional stability can be improved.

The area of a section of the rear body 150 which section is perpendicular to the aircraft axis 12 does not change in the aircraft axis direction, i.e., is constant in the aircraft axis direction. Even in this case, the decrease in the directional stability by the absence of the tail can be reduced. It should be noted that the rear body 150 may be reduced in size such that: the size in at least one of the upper-lower direction and the left-right direction decreases toward the rear side; and the area of the section perpendicular to the aircraft axis 12 decreases toward the rear side.

### Other Modified Example

The above embodiments have described the rear bodies 50 and 150 in each of which the section perpendicular to the aircraft axis 12 is a polygonal shape, i.e., a hexagonal shape or a quadrangular shape. However, the shapes of the rear bodies 50 and 150 are not limited to these.

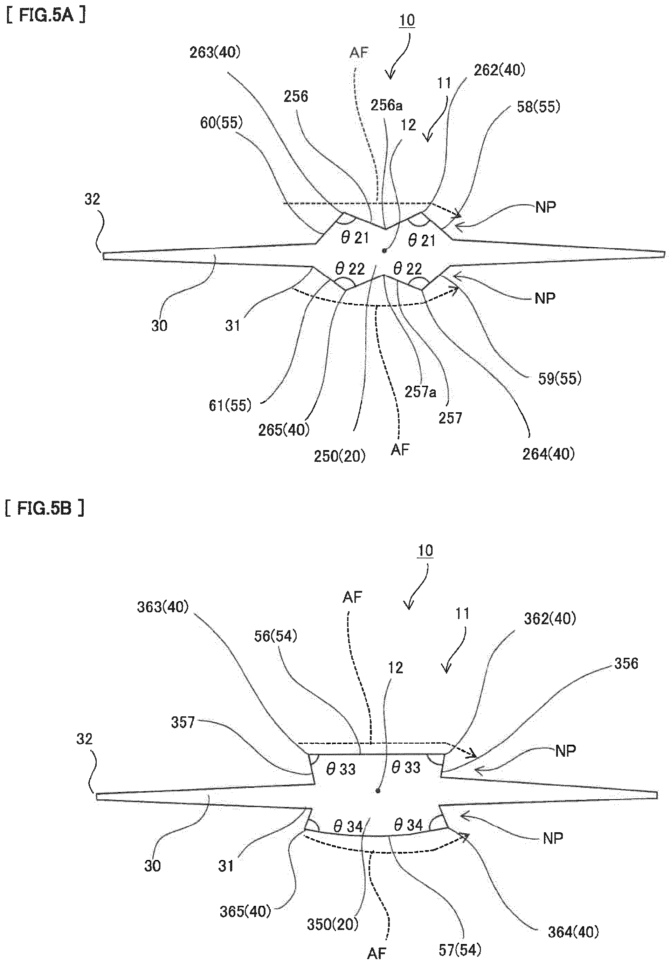

For example, as shown in FIG. 5A, the section perpendicular to the aircraft axis 12 may have such a polygonal shape that regarding the hexagonal section perpendicular to the aircraft axis 12 in FIG. 3, a ceiling surface 256 and bottom surface 257 of a rear body 250 are depressed toward the aircraft axis 12. For example, the ceiling surface 256 has such a shape as to be bent at a bent portion 256a to form two flat surfaces, and the bottom surface 257 has such a shape as to be bent at a bent portion 257a to form two flat surfaces. In this case, a corner portion 262 between the ceiling surface 256 and the side surface 55, a corner portion 263 between the ceiling surface 256 and the side surface 55, a corner portion 264 between the bottom surface 257 and the side surface 55, and a corner portion 265 between the bottom surface 257 and the side surface 55 constitute the negative pressure generating portions 40. Each of angles θ21 and θ22 of the corner portions 262, 263, 264, and 265 is 60° or more and 150° or less.

For example, as shown in FIG. 5B, the section perpendicular to the aircraft axis 12 may have such a polygonal shape that regarding the quadrangular section perpendicular to the aircraft axis 12 in FIG. 4, side surfaces 356 and 357 of a rear body 350 are depressed toward the aircraft axis 12. In this case, a corner portion 362 between the ceiling surface 56 and the side surface 356, a corner portion 363 between the ceiling surface 56 and the side surface 357, a corner portion 364 between the bottom surface 57 and the side surface 356, and a corner portion 365 between the bottom surface 57 and the side surface 357 constitute the negative pressure generating portions 40. Each of angles θ33 and θ34 of the corner portions 362, 363, 364, and 365 is 60° or more and 90° or less.

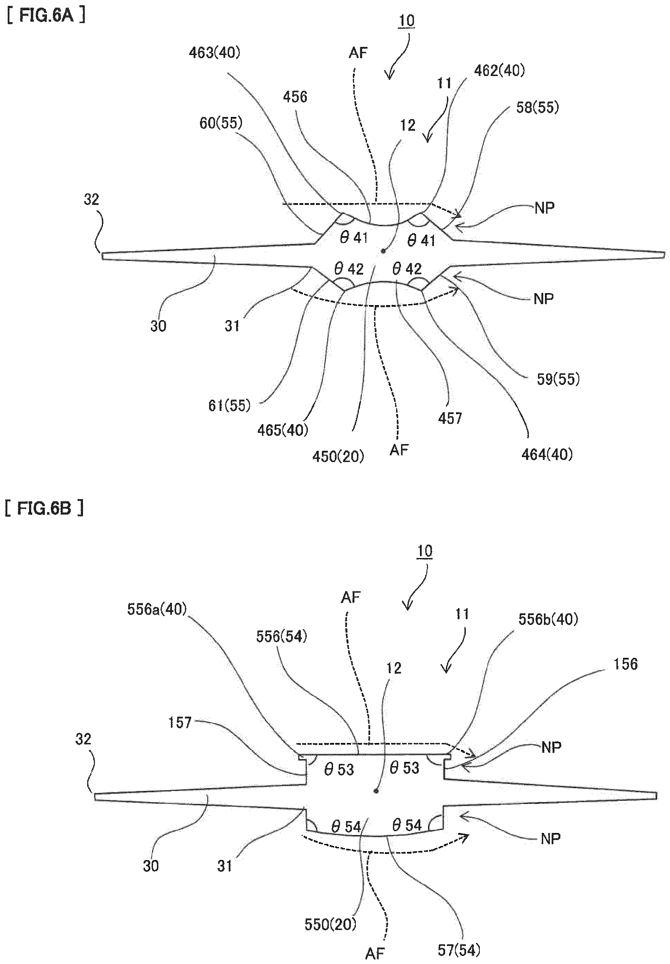

As shown in FIG. 6A, part of a polygonal section of a rear body 450 which section is perpendicular to the aircraft axis 12 may have a curved shape. For example, a ceiling surface 456 is formed by a curved surface that curves so as to be depressed toward the aircraft axis 12, and a bottom surface 457 is formed by a curved surface that curves so as to be depressed toward the aircraft axis 12. In this case, a corner portion 462 between the ceiling surface 456 and the side surface 55, a corner portion 463 between the ceiling surface 456 and the side surface 55, a corner portion 464 between the bottom surface 457 and the side surface 55, and a corner portion 465 between the bottom surface 457 and the side surface 55 constitute the negative pressure generating portions 40. Each of angles θ41 and θ42 of the corner portions 462, 463, 464, and 465 is 60° or more and 150° or less.

In the above embodiment, the corner portions of the rear body 50 formed in a polygonal shape constitute the negative pressure generating portions 40. However, the above embodiment is not limited to this. The other configuration may be adopted as long as the negative pressure is generated on the side surface located at a side toward which the nose is directed in the rear body 50 when the airframe 11 sideslips. For example, as shown in FIG. 6B, the side surfaces 156 and 157 of a rear body 550 may be depressed toward the aircraft axis 12, and left and right end portions 556a and 556b of a ceiling surface 556 may be formed so as to project in a lateral direction beyond the corresponding side surfaces 156 and 157. These end portions 556a and 556b constitute the negative pressure generating portions 40. As with the ceiling surface 556, left and right end portions of a bottom surface 557 may be formed so as to project in the lateral direction beyond the corresponding side surfaces 156 and 157 and may constitute the negative pressure generating portions 40. The direction in which the end portions 556a and 556b project is not limited to the lateral direction and may be an upper direction, or upper-left and upper-right oblique directions.

The above embodiments may be combined with each other as long as they do not exclude each other. The foregoing explanation should be interpreted only as an example and is provided for the purpose of teaching the best mode for carrying out the present invention to one skilled in the art. The structures and/or functional details may be substantially modified within the scope of the present invention.

### Industrial Applicability

The vertical-tailless aircraft of the present invention is useful as, for example, a vertical-tailless aircraft capable of improving directional stability by a simple configuration while suppressing a cost increase.

### Reference Signs List

- 10: vertical-tailless aircraft
- 20: body
- 30: main wing
- 40: negative pressure generating portion
- 50: rear body (rear portion)
- 54: end surface
- 55: side surface
- 56: ceiling surface
- 57: bottom surface
- 58: upper-right side surface (side surface)
- 59: lower-right side surface (side surface)
- 60: upper-left side surface (side surface)
- 61: lower-left side surface (side surface)
- 62: upper-right corner portion (corner portion)
- 63: upper-left corner portion (corner portion)
- 64: lower-right corner portion (corner portion)
- 65: lower-left corner portion (corner portion)
- 150: rear body (rear portion)
- 156: right side surface (side surface)
- 157: left side surface (side surface)
- 162: upper-right corner portion (corner portion)
- 163: upper-left corner portion (corner portion)
- 164: lower-right corner portion (corner portion)
- 165: lower-left corner portion (corner portion)
- 250: rear body (rear portion)
- 256: ceiling surface
- 257: bottom surface
- 262: upper-right corner portion (corner portion)
- 263: upper-left corner portion (corner portion)
- 264: lower-right corner portion (corner portion)
- 265: lower-left corner portion (corner portion)
- 350: rear body (rear portion)
- 356: right side surface (side surface)
- 357: left side surface (side surface)
- 362: upper-right corner portion (corner portion)
- 363: upper-left corner portion (corner portion)
- 364: lower-right corner portion (corner portion)
- 365: lower-left corner portion (corner portion)
- 450: rear body (rear portion)
- 456: ceiling surface
- 457: bottom surface
- 462: upper-right corner portion (corner portion)
- 463: upper-left corner portion (corner portion)
- 464: lower-right corner portion (corner portion)
- 465: lower-left corner portion (corner portion)
- 550: rear body (rear portion)
- 556: right side surface (side surface)
- 556a: end portion (negative pressure generating portion)
- 556b: end portion (negative pressure generating portion)
- 557: left side surface (side surface)

## Claims

1. A vertical-tailless aircraft (10), comprising:
a body (20) extending in a direction along an aircraft axis and including a front body (21) and a rear body (50) in the aircraft axis direction;
a main wing (30) provided on a side surface (55) of the body; and a negative pressure generating portion (40) provided at the rear body, the negative pressure generating portion configured to generate negative pressure on the side surface of the rear body in a case that the vertical-tailless aircraft sideslips, wherein
the negative pressure generating portion includes an upper corner portion (62, 63) and a lower corner portion (64, 65), wherein
the upper corner portion is formed between a ceiling surface (56) of the body and the side surface, and
the lower corner portion is formed between a bottom surface (57) of the body and the side surface,
**characterized in that**
each of interior angles (θ1; θ2) of the upper and lower corner portions in a section of the rear body which section is perpendicular to the aircraft axis is 60° or more and 150° or less.

2. The vertical-tailless aircraft according to claim 1, wherein the rear body (50) has a polygonal section perpendicular to the aircraft axis.

3. The vertical-tailless aircraft according to claim 1 or 2, wherein a size of the rear body (50) in a left-right direction is reduced toward a rear side such that an area of a section of the rear body which section is perpendicular to the aircraft axis decreases toward the rear side.

4. The vertical-tailless aircraft according to any one of claims 1 to 3, wherein at least one of a ceiling surface (56) and bottom surface (57) of the rear body (50) is a flat surface.

## Patentansprüche

1. Flugzeug (10) ohne vertikales Leitwerk, umfassend:
einen Körper (20), der sich in einer Richtung entlang einer Flugzeugachse erstreckt und einen vorderen Körper (21) und einen hinteren Körper (50) in Richtung der Flugzeugachse umfasst;
einen Hauptflügel (30), der an einer Seitenfläche (55) des Körpers vorgesehen ist; und
einen Unterdruck-Erzeugungsabschnitt (40), der an dem hinteren Körper vorgesehen ist, wobei der Unterdruck-Erzeugungsabschnitt so konfiguriert ist, dass er auf der Seitenfläche des hinteren Körpers einen Unterdruck erzeugt, falls das Flugzeug ohne vertikales Leitwerk im Seitengleitflug ist, wobei
der Unterdruck-Erzeugungsabschnitt einen oberen Eckabschnitt (62, 63) und einen unteren Eckabschnitt (64, 65) umfasst, wobei
der obere Eckabschnitt zwischen einer Deckenfläche (56) des Körpers und der Seitenfläche gebildet ist, und
der untere Eckabschnitt zwischen einer Bodenfläche (57) des Körpers und der Seitenfläche gebildet ist,
**dadurch gekennzeichnet, dass**
jeder der Innenwinkel (θ1; θ2) der oberen und unteren Eckabschnitte in einem senkrecht zu der Flugzeugachse verlaufenden Querschnitt des hinteren Körpers 60° oder mehr und 150° oder weniger beträgt.

2. Flugzeug ohne vertikales Leitwerk nach Anspruch 1, wobei der hintere Körper (50) einen polygonalen Querschnitt senkrecht zur Flugzeugachse aufweist.

3. Flugzeug ohne vertikales Leitwerk nach Anspruch 1 oder 2, wobei eine Größe des hinteren Körpers (50) in einer Links-Rechts-Richtung zu einer Rückseite hin verringert ist, so dass eine Fläche eines senkrecht zu der Flugzeugachse verlaufenden Querschnitts des hinteren Körpers zur Rückseite hin abnimmt.

4. Flugzeug ohne vertikales Leitwerk nach einem der Ansprüche 1 bis 3, wobei die Deckenfläche (56) und/oder die Bodenfläche (57) des Heckkörpers (50) eine ebene Fläche ist.

## Revendications

1. Aéronef sans queue verticale (10), comprenant :
un corps (20) s'étendant dans la direction d'un axe d'aéronef et comportant un corps avant (21) et un corps arrière (50) dans la direction de l'axe d'aéronef,
une aile principale (30) prévue sur une surface latérale (55) du corps, et
une partie génératrice de pression négative (40) prévue au niveau du corps arrière, la partie génératrice de pression négative étant conçue pour générer une pression négative sur la surface latérale du corps arrière au cas où l'aéronef sans queue verticale subit un dérapage ; étant entendu que
la partie génératrice de pression négative comporte une partie formant coin supérieur (62, 63) et une partie formant coin inférieur (64, 65), sachant que
la partie formant coin supérieur est formée entre une surface de plafond (56) du corps et la surface latérale, et
la partie formant coin inférieur est formée entre une surface inférieure (57) du corps et la surface latérale,
**caractérisé en ce que**
chaque angle parmi les angles intérieurs (θ1 ; θ2) des parties formant coin supérieur et inférieur selon une section du corps arrière, laquelle est perpendiculaire à l'axe d'aéronef, fait 60° ou plus et 150° ou moins.

2. Aéronef sans queue verticale selon la revendication 1, dans lequel le corps arrière (50) a une section polygonale perpendiculairement à l'axe d'aéronef.

3. Aéronef sans queue verticale selon la revendication 1 ou 2, dans lequel la taille du corps arrière (50) selon une direction gauche-droite est réduite vers un côté arrière de telle manière que l'aire d'une section du corps arrière, laquelle est perpendiculaire à l'axe d'aéronef, diminue vers le côté arrière.

4. Aéronef sans queue verticale selon l'une quelconque des revendications 1 à 3, dans lequel au moins une surface parmi une surface de plafond (56) et une surface inférieure (57) du corps arrière (50) est une surface plane.
